# EUROPÄISCHE PATENTSCHRIFT

(11) **EP 1 068 122 B1**
(45) Veröffentlichungstag und Bekanntmachung des Hinweises auf die Patenterteilung: **18.12.2002**
(21) Anmeldenummer: 99919151.3
(22) Anmeldetag: 29.03.1999
(51) Int. Cl.: B60T 8/48, B60T 8/40

(54) **BLOCKIERGESCHÜTZTE KRAFTFAHRZEUG-BREMSANLAGE**
ANTI-LOCK-UP VEHICLE BRAKING SYSTEM
SYSTEME DE FREINAGE ANTIBLOCAGE POUR VEHICULE

(30) Priorität: 07.04.1998 DE 19815468; 09.09.1998 DE 19841152
(43) Veröffentlichungstag der Anmeldung: 17.01.2001
(73) Patentinhaber: Continental Teves AG & Co. oHG, 60488 Frankfurt am Main (DE)
(72) Erfinder: REINARTZ, Hans-Dieter, D-60439 Frankfurt am Main (DE); STEFFES, Helmut, D-65795 Hattersheim (DE); SCHMITT, Stefan, A., D-63867 Johannesberg (DE); BAECHLE, Martin, D-61479 Glashütten 1 (DE)
(86) Internationale Anmeldenummer: EP9902127
(87) Internationale Veröffentlichungsnummer: WO99051477

(56) Entgegenhaltungen:
- DE-A- 3 906 530
- DE-A- 4 001 421
- DE-A- 4 039 661
- DE-A- 4 213 199
- DE-C- 4 415 651

## Beschreibung

Die Erfindung betrifft eine blockiergeschützte Kraftfahrzeug-Bremsanlage zur Antriebsschlupf- und/oder Fahrstabilitätsregelung nach dem Oberbegriff des Anspruchs 1.

Aus dem Stand der Technik sind Bremsanlagen bekannt, bei denen während einer Antriebsschlupf- oder einer Fahrstabilitätsregelung die Rückförderpumpe zur Reaktionszeitverkürzung vorgeladen wird.

Die DE 41 28 091 C2 zeigt eine blockiergeschützte Kraftfahrzeug-Bremsanlage zur Antriebsschlupf- und /oder Fahrsstabilitätsregelung bekannt, in der ein Vordruckerzeuger im Druckmittelbehälter der Anlage angeordnet ist, dessen Fördervolumen allerdings begrenzt ist. Um im Falle einer Antriebsschlupf- oder Fahrstabilitätsregelung die Rückförderpumpe an ihrer Saugseite mit einem erhöhten Druck- und Bremsflüssigkeitsvolumen zu versorgen, muß diese mittels Vordruckerzeuger aus dem Bremsflüssigkeitsvorratsbehälter durch den Hauptbremszylinder und durch die Bremskraftleitung zur Saugseite der Pumpe gefördert werden.

Weiterhin ist eine blockiergeschützte Bremsanlage zur Antriebsschlupf- und Fahrstabilitätsregelung bekannt, die den nötigen Vordruck an der Saugseite der Rückförderpumpe mittels einer zweiten Förderpumpe bereitstellt.

Eine dritte Möglichkeit, die Rückförderpumpe mit zusätzlicher Bremsflüssigkeit zu versorgen, besteht aus einem automatisch betätigbaren Bremskraftverstärker. Während einer Antriebsschlupf- oder Fahrstabilitätsregelung wird dieser ohne Fahrereinwirkung betätigt und ist dadurch in der Lage, die Rückförderpumpe mit zusätzlichem Bremsflüssigkeitsvolumen zu versorgen.

Die drei aus dem Stand der Technik beschriebenen Möglichkeiten eine Rückförderpumpe für die Antriebsschlupf- und Fahrstabilitätsregelung vorzuladen, benötigen zusätzliche Baueinheiten, die die gesamte Bremsanlage vergrößern und verteuern, sowie deren Gewicht erhöhen.

Die vorliegende Erfindung hat die Aufgabe, eine blockiergeschützte Bremsanlage der beschriebenen Art darzustellen, die mit billigeren und weniger komplexen Baugruppen zum Vorladen der Rückförderpumpe auskommt.

Die erfindungsgemäße Lösung der Aufgabe wird durch die Merkmale des Patentanspruchs 1 wiedergegeben. Die weiteren Ansprüche enthalten vorteilhafte Aus- und Weiterbildungen der Erfindung.

Das Prinzip der Erfindung beruht darauf, ein Vorbefüllsystem, das mindestens einen ersten Unterdruckspeicher aufweist, im Hydroaggregat der Anlage zu integrieren. Der mindestens eine erste im Hydraulikschaltkreis des Hydroaggregats angeordnete Unterdruckspeicher sorgt dafür, daß das angesaugte Bremsflüssigkeitsvolumen gleichmaßig strömt, wodurch eine maximale Förderleistung der Pumpe erreicht wird.

In einer vorteilhaften Weiterbildung ist vorgesehen einen zweiten Unterdruckspeicher zur Unterstützung des ersten Unterdruckspeichers ebenfalls im Hydraulikaggregat der Anlage zu integrieren um eine gleichmäßige Strömung des angesaugten Bremsflüssigkeitsvolumens zu erreichen, ist in einer besonders vorteilhaften Ausgestaltung der Erfindung der erste Unterdruckspeicher direkt am Pumpensaugraum und der zweite Unterdruckspeicher direkt hinter dem erstenelektrischen Umschaltventil angeordnet. Während des Ausschiebetaktes der Pumpe übernehmen beide Unterdruckspeicher das Weitersaugen des Bremsflüssigkeitsvolumen aus der Leitung des Hauptbremszylinders. Zusätzlich übernimmt der am Saugraum der Rückförderpumpe angeordnete erste Unterdruckspeicher am Ende des Saugtaktes das für das Schließen des Saugventils notwendige Volumen und stellt damit für den Beginn des nächsten Saugtaktes das nötige Bremsflüssigkeitsvolumen direkt an der Saugseite der Pumpe zur Verfügung. Der zweite hinter dem ersten elektrischen Umschaltventil angeordnete Unterdruckspeicher übernimmt die angesaugte Flüssigkeitssäule und kompensiert dadurch die Druckspitze, die durch die Massenträgheit der Flüssigkeitssäule ansonsten auf die Saugseite der Pumpe durchschlagen würde. Durch die aufgezeigten Maßnahmen werden die Beschleunigungs- und Verzögerungsanteile des Volumenstroms, die durch das Ansaugen und Ausstoßen der Bremsflüssigkeit durch die Pumpe entsteht, unterdrückt und der Volumenstrom dadurch vergleichmäßigt. Der zeitliche Mittelwert des Volumenstroms auf der Saugseite entspricht der Förderleistung der Pumpe. Entsprechend wird die Förderleistung durch die Vergleichmäßigung des Volumenstroms erheblich erhöht. Ein weiterer vorteilhafter Effekt der Volumenstromvergleichmäßigung besteht darin, daß die sinkende Förderleistung der Pumpe bei tiefen Temperaturen aufgrund des sich erhöhenden Fließwiderstandes durch das Bereitstellen von Bremsflüssigkeitsvolumen an der Saugseite der Rückförderpumpe kompensiert wird.

Weitere Merkmale, Vorteile und Einzelheiten der Erfindung sind in zwei Figuren der Zeichnung und in der Beschreibung im einzelnen dargestellt. Es zeigen:
- Fig. 1: ein vorteilhaftes Ausführungsbeispiel der erfindungsgemäßen Kraftfahrzeug-Bremsanlage anhand eines Hydraulikschaltplans und
- Fig. 2: eine vorteilhafte konstruktive Lösung der Bremsanlage gemäß Fig.1 im Ausschnitt mit der Anordnung des ersten Unterdruckspeichers (18 in Fig.1) am Saugraum der Rückförderpumpe.

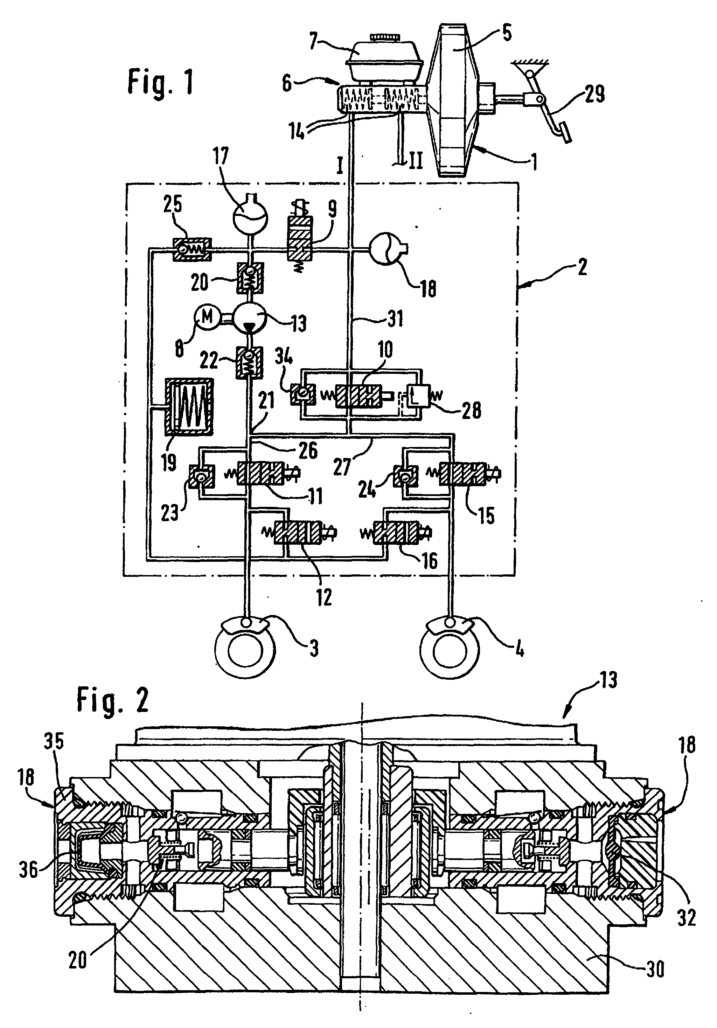

Die in Fig. 1 dargestellte erfindungsgemäße Bremsanlage weist zwei Bremskreise I und II auf, deren Aufbau völlig identisch ist, so daß die folgende Beschreibung eines der beiden Bremskreise I,II ebenso auf den anderen zutrifft. Die gezeigte Bremsanlage besteht im wesentlichen aus einem Bremsdruckgeber 1, an den über nicht näher bezeichnete hydraulische Leitungen Radbremszylinder 3,4 angeschlossen sind und einem zwischen dem Bremsdruckgeber 1 und den Radbremsen geschalteten Hydroaggregat 2. Die Zuordnung der Radbremszylinder 3,4 der einzelnen Bremskreise I,II ist in der üblichen Weise derart getroffen, daß der erste Radbremszylinder 3 entweder einem Rad einer Fahrzeugachse und der andere Radbremszylinder 4 dem diagonal gegenüberliegenden Rad der anderen Fahrzeugachse zugeordnet ist (diagonale Aufteilung der Bremskreise) oder aber beide Radbremszylinder 3,4 derselben Fahrzeugachse zugeordnet sind (Schwarz-Weiß-Aufteilung der Bremskreise).

Der vom Fahrer des Kraftfahrzeugs mittels eines Bremspedals 29 betätigbare Druckgeber 1 besteht aus einem pneumatischen Bremskraftverstärker 5, dem ein Hauptbremszylinder 6 nachgeschaltet ist, dessen Druckräume 14 mit einem Druckmittelvorratsbehälter 7 verbunden sind.

Das Hydraulikaggregat 2 weist ein Motorpumpenaggregat auf, das aus einer durch einen Elektromotor 8 angetriebenen hydraulischen Rückförderpumpe 13 besteht, deren Saugseite über ein erstes Rückschlagventil 20 sowie ein elektromagnetisch betätigbares erstes Ventil in Form eines Schaltventils 9 an den Druckraum 14 des Hauptbremszylinders 6 angeschlossen ist. Zwischen dem ersten Rückschlagventil 20 und dem Schaltventil 9 ist ein erster Unterdruckspeicher 17 angeordnet. Von der Druckseite der Rückförderpumpe 13 strömt das Druckmittel über ein zweites Rückschlagventil 22 und eine nicht gezeigte Dämpfungskammer zu einem hydraulischen Knotenpunkt 21. An diesen angeschlossen ist sowohl ein zum ersten Radbrems-zylinder 3 führender Leitungsabschnitt 26 als auch ein zum zweiten Radbremszylinder 4 führender Leitungsabschnitt 27. Eine hydraulische Leitung 31 verbindet die Druckseite der Rückförderpumpe 13 mit dem Tandem-Hauptzylinder 3. Außerdem ist zwischen dem Knotenpunkt 21 und dem Hauptbremszylinder 6 ein zweites Ventil, daß vorzugsweise als elektromagnetisch betätigbares Trennventil 10 ausgebildet ist und dem sowohl ein drittes Rückschlagventil 34 als auch ein Druckbegrenzungs-ventil 28 parallel zugeschaltet sind. zwischen dem Trennventil 10 und dem Hauptbremszylinder 6 ist an der Hydraulikleitung 31 am Abzeig zur Saugseite der Pumpe 13 ein zweiter Unterdruckspeicher 18 angeordnet. Zur Modulation des im ersten Radbremszylinder 3 eingesteuerten Drucks dienen eine Parallelschaltung eines Einlaßventil 11 mit einem vierten Rückschlagventil 23 sowie ein Auslaßventil 12, wobei die erwähnte Parallelschaltung im Leitungsabschnitt 26 eingefügt ist und das Auslaßventil 12 zum Zwecke eines Radbremsdruckabbaus eine Verbindung zwischen dem ersten Radbremszylinder 3 und einem Niederdruckspeicher 19 ermöglicht, der über ein fünftes Rückschlagventil 25 mit der Saugseite der Rückförderpumpe 13 verbunden ist. Um in dem zum betrachteten Bremskreis gehörenden zweiten Radbremszylinder 4 analog zum bereits betrachteten Radbremszylinder 3 den darin eingesteuerten hydraulischen Druck regulieren zu können, sind eine zweite Parallelschaltung eines zweiten Einlaßventils 15 mit einem sechsten Rückschlagventil 24 sowie ein zweites Auslaßventil 16 vorgesehen, wobei die erwähnte Parallel-schaltung im Leitungsabschnitt 27 eingefügt ist und das Auslaßventil 16 zum Zweck eines Radbremsdruckabbaus eine Verbindung zwischen dem zweiten Radbremszylinder 4 und dem Niederdruckspeicher 19 herstellt. Bei einer Normalbremsung kann in den Radbremszylindern 3,4 sowohl ein Druckauf- als auch ein Druckabbau durch entsprechende Betätigung des Bremsdruckgebers 1 über das offene Trennventil 10 sowie die offenen Einlaßventile 11 und 15 erfolgen.

Bei einer ABS-Regelbremsung, bei der beispielsweise das der Radbremse 3 zugeordnete Rad zu blockieren droht, wird die Rückförderpumpe 13 gestartet. Sowohl das Schaltventil 9 als auch das Trennventil 10 bleiben unbetätigt. Die Druckmodulation erfolgt durch entsprechendes Schalten des Einund des Auslaßventils 11 und 12, wobei das in den Niederdruckspeicher 19 abgelassene Druckmittel mit der Rückförderpumpe 13 auf das Hauptbremszylinder-Druckniveau zurückgefördert wird.

Beim Eintritt in jeden Fremdbremsvorgang, wie z.B. eine Antriebsschlupf- oder Fahrstabilitätsregelung werden das Trennventil 10 geschlossen und das Schaltventil 9 geöffnet. Ab diesem Zeitpunkt dient die Rückförderpumpe 13, die durch den vom ersten und zweiten Unterdruckspeicher 17 und 18 aufgebauten Druck vorgeladen wird, als Drucklieferant für den Druckaufbau in den Radbremszylindern 3,4.

Der Druckaufbau erfolgt über das offene Einlaßventil 11,15. Eine Druckhaltephase wird durch Umschalten des Einlaßventils 11,15 erreicht, während ein Druckabbau durch Umschalten des Auslaßventils 12,16 bei noch geschlossenem Einlaßventil 11,15 erfolgt. Mit Hilfe von Druckaufbau-, Halte- und Abbauphasen wird der für die Regelung erforderliche Druckverlauf erzeugt. Ist der Regelvorgang beendet, so wird das Schaltventil 9 geschlossen und das Trennventil 10 geöffnet. Das in den Niederdruckspeicher 19 abgelassene Druckmittel als auch das Druckmittelvolumen aus den Radbremszylindern 3 und 4 wird durch die Rückförderpumpe 13 zurück in den Hauptzylinder 6 gefördert.

Fig. 2 zeigt einen Querschnitt durch eine Rückförderpumpe 13. Der Unterdruckspeicher 18 ist hier als Patrone 35 dargestellt und ist in das Pumpengehäuse 30 vor das Rückschlagventil 20 an der Pumpensaugseite in das Gehäuse 30 eingeschraubt. Je nach Bauvolumen im Pumpengehäuse 30 können zwei unterschiedlich aufgebaute Unterdruckspeicher 17 verwendet werden. Auf der linken Seite der Zeichnung ist ein Unterdruckspeicher 17 mit einer töpfförmigen Membran 36 verwendet. Auf der rechten Seite wird alternativ ein Unterdruckspeicher 17 mit einer Flachmembran 32 dargestellt.

Beide Speicherarten erfüllen durch ihre elastische Membran gleichzeitig die Funktion eines Dämpfers. Die auf die elastischen Membrane auftreffende pulsierede Bremsflüssigkeit wird durch diese beruhigt und es findet eine Vergleichmäßigung der Strömung statt.

## Patentansprüche

1. Blockiergeschützte Bremsanlage für Kraftfahrzeuge zur Antriebschlupf- und/oder Fahrstabilitätsregelung, mit einem Bremsdruckgeber (1), welcher einen Hauptbremszylinder (6) aufweist, mit einem Hydroaggregat (2), wobei das Hydroaggregat (2) Rückförderpumpen (13), erste Ventile (9), zweite Ventile (10) und ein Vorbefüllsystem aufweist, welches während einer Antriebsschlupf- und/oder Fahrstabilitätsregelung die Pumpe vorbefüllt, **dadurch gekennzeichnet, daß** das Vorbefüllsystem mindestens einen ersten Unterdruckspeicher (17,18) aufweist.

2. Blockiergeschützte Bremsanlage nach Anspruch 1, **dadurch gekennzeichnet, daß** der mindestens eine erste Unterdruckspeicher (17) direkt an der Saugseite der Rückförderpumpe (13) angeordnet ist und daß das erste Ventil (9) an der Saugseite der Rückförderpumpe (13) angeordnet ist.

3. Blockiergeschützte Bremsanlage nach einem der Ansprüche 1 oder 2, **dadurch gekennzeichnet, daß** ein zweite Unterdruckspeicher (18) zwischen dem Hauptbremszylinder (6), dem ersten Ventil (9) und dem zweiten Ventil (10) angeschlossen ist.

4. Blockiergeschützte Bremsanlage nach einem der Ansprüchen 1 bis 3, **dadurch gekennzeichnet, daß** mindestens einer der beiden Unterdruckspeicher (17,18), vorzugsweise beide Unterdruckspeicher im Gehäuse (30) der Rückförderpumpe (13) oder im Gehäuse (30) des Hydraulikaggregats (2) integriert ist.

5. Blockiergeschützte Bremsanlage nach Anspruch 4, **dadurch gekennzeichnet, daß** mindestens ein im Gehäuse der Rückförderpumpe (13) integrierte Unterdruckspeicher (17,18) in einer Patrone (35) angeordnet ist, die im Pumpengehäuse (30) am Saugraum der Rückförderpumpe (13) eingesetzt, vorzugsweise eingeschraubt ist.

6. Blockiergeschützte Bremsanlage nach einem der vorhergehenden Ansprüche, **dadurch gekennzeichnet, daß** mindestens einer der beiden Unterdruckspeicher (17,18) ein Membranspeicher ist.

7. Blockiergeschützte Bremsanlage nach Anspruch 6, **dadurch gekennzeichnet, daß** der Membranspeicher (17) mit topfförmiger Membran (36) oder flächiger Membran (32) ausgeführt ist.

8. Blockiergeschützte Bremsanlage nach einem der Ansprüche 1 bis 8, **dadurch gekennzeichnet, daß** mindestens einer der Unterdruckspeicher (17,18) zusätzlich die Funktion als Pulsationsdämpfer ausübt.

## Claims

1. Anti-lock brake system for automotive vehicles for traction slip control and/or driving stability control, which includes a brake pressure generator (1) having a master brake cylinder (6), a hydraulic unit (2), with the hydraulic unit (2) including return pumps (13), first valves (9), second valves (10), and a prefilling system that prefills the pump during a traction slip and/or driving stability control operation,
**characterized in that** the prefilling system includes at least one first vacuum accumulator (17, 18).

2. Anti-lock brake system as claimed in claim 1,
**characterized in that** the at least one first vacuum accumulator (17) is arranged directly on the suction side of the return pump (13), and **in that** the first valve (9) is arranged on the suction side of the return pump (13).

3. Anti-lock brake system as claimed in any one of claims 1 or 2,
**characterized in that** a second vacuum accumulator (18) is connected between the master brake cylinder (6), the first valve (9), and the second valve (10).

4. Anti-lock brake system as claimed in any one of claims 1 to 3,
**characterized in that** at least one of the two vacuum accumulators (17, 18), preferably both vacuum accumulators, is integrated in the housing (30) of the return pump (13) or in the housing (30) of the hydraulic unit (2).

5. Anti-lock brake system as claimed in claim 4,
**characterized in that** at least one vacuum accumulator (17, 18) integrated in the housing of the return pump (13) is arranged in a cartridge (35) which is mounted, preferably screwed, into the pump housing (30) at the suction chamber of the return pump (13).

6. Anti-lock brake system as claimed in any one of the preceding claims,
**characterized in that** at least one of the two vacuum accumulators (17, 18) is a diaphragm-type accumulator.

7. Anti-lock brake system as claimed in claim 6,
**characterized in that** the diaphragm-type accumulator (17) is provided with a bowl-shaped diaphragm (36) or a flat diaphragm (32).

8. Anti-lock brake system as claimed in any one of claims 1 to 8,
**characterized in that** at least one of the vacuum accumulators (17, 18) additionally performs the function of a pulsation damper.

## Revendications

1. Système de freinage antiblocage pour véhicules automobiles pour la régulation du patinage d'entraînement et/ou la régulation de la stabilité de conduite, comportant un transducteur de pression de freinage (1) qui comporte un cylindre de frein principal (6), comportant un groupe hydraulique (2), le groupe hydraulique (2) comportant des pompes de refoulement (13), des premières soupapes (9), des deuxièmes soupapes (10) et un système de pré-remplissage qui préremplit la pompe pendant une régulation du patinage d'entraînement et/ou de la stabilité de conduite, **caractérisé en ce que** le système de pré-remplissage comporte au moins un premier accumulateur à vide (17, 18).

2. Système de freinage antiblocage selon la revendication 1, **caractérisé en ce que** le ou les premiers accumulateurs à vide (17) sont disposés directement sur le côté aspiration de la pompe de refoulement (13), et **en ce que** la première soupape (9) est disposée sur le côté aspiration de la pompe de refoulement (13).

3. Système de freinage antiblocage selon l'une des revendications 1 ou 2, **caractérisé en ce qu'**un deuxième accumulateur à vide (18) est raccordé entre le cylindre de frein principal (6), la première soupape (9) et la deuxième soupape (10).

4. Système de freinage antiblocage selon l'une des revendications 1 à 3, **caractérisé en ce qu'**au moins l'un des deux accumulateurs à vide (17, 18), de préférence les deux accumulateurs à vide, sont intégrés dans le carter (30) de la pompe de refoulement (13) ou dans le carter (30) du groupe hydraulique (2).

5. Système de freinage antiblocage selon la revendication 4, **caractérisé en ce qu'**au moins un accumulateur à vide (17, 18), intégré dans le carter de la pompe de refoulement (13), est disposé dans une cartouche (35) qui est insérée, de préférence vissée, à l'intérieur du carter (30) de la pompe, dans la chambre d'aspiration de la pompe de refoulement (13).

6. Système de freinage antiblocage selon l'une des revendications précédentes, **caractérisé en ce qu'**au moins l'un des deux accumulateurs à vide (17, 18) est un accumulateur à membrane.

7. Système de freinage antiblocage selon la revendication 6, **caractérisé en ce que** l'accumulateur à membrane (17) comporte une membrane (36) en forme de pot ou une membrane (32) plate.

8. Système de freinage antiblocage selon l'une des revendications 1 à 8, **caractérisé en ce qu'**au moins l'un des accumulateurs à vide (17, 18) exerce en outre la fonction d'amortisseur de pulsations.
